# FASCICULE DE BREVET EUROPEEN

(11) **EP 4 353 524 B1**
(45) Date de publication et mention de la délivrance du brevet: **23.07.2025**
(21) Numéro de dépôt: 23202033.9
(22) Date de dépôt: 06.10.2023
(51) Int. Cl.: B60N 2/00

(54) **TAPIS DE DÉTECTION D OCCUPATION D'UN SIÈGE DE VÉHICULE AUTOMOBILE, SYSTÈME DE DÉTERMINATION D'UNE CAPACITÉ, PROCÉDÉ DE DÉTERMINATION D'UNE CAPACITÉ OU D'UN ÉTAT D OCCUPATION D'UN SIÈGE, PROCÉDÉ DE DÉTECTION D'UNE ROTATION D'UNE PARTIE DU TRONC D'UN OCCUPANT ASSIS SUR UN SIÈGE**
SITZBELEGUNGSERKENNUNGSMATTE, SYSTEM ZUR BESTIMMUNG EINER KAPAZITÄT, VERFAHREN ZUR BESTIMMUNG EINER KAPAZITÄT ODER EINES BELEGUNGSZUSTANDES EINES SITZES, VERFAHREN ZUM ERFASSEN EINES SITZTEILS
MOTOR VEHICLE SEAT OCCUPANCY SENSOR MAT, CAPACITANCE DETERMINATION SYSTEM, SEAT OCCUPANCY METHOD

(30) Priorité: 12.10.2022 FR 2210450
(43) Date de publication de la demande: 17.04.2024
(73) Titulaire: FAURECIA Sièges d'Automobile, 92000 Nanterre (FR)
(72) Inventeur: BALDE, Mamadou, 91150 MORIGNY-CHAMPIGNY (FR); DJIRAM, Abdou Latif, 91380 CHILLY-MAZARIN (FR)
(74) Mandataire: Plasseraud IP

(56) Documents cités:
- FR-A1- 3 098 769
- US-A1- 2013 127 212

## Description

### Domaine technique de l'invention

L'invention concerne le domaine des tapis de détection d'état d'occupation de siège de véhicule automobile.

### Etat de la technique antérieure

Les valeurs de capacités mesurées aux bornes des capteurs capacitifs interdigités d'un tapis de détection d'occupation sont généralement entachées d'une erreur qui varie d'une part en fonction de chaque capteur, de chaque siège et de chaque véhicule, et d'autre part en fonction du temps.

Cette erreur peut occasionner des difficultés de détection de la présence d'une personne ou des difficultés de détermination du type de personne. Ces difficultés augmentent au cours de la vie du produit.

Pour pallier cet inconvénient, il est connu de réaliser des mesures de capacités de chaque capteur capacitif interdigité de chaque tapis de détection lorsque le siège est monté dans le véhicule puis d'enregistrer une valeur de correction pour chaque capteur capacitif interdigité dans une mémoire d'un contrôleur. Ces mesures peuvent être effectuées en usine ou chez le concessionnaire lorsque le siège est fixé dans le véhicule.

Toutefois, ce réglage nécessite du temps et de la main d'œuvre. Il doit être effectué à nouveau dès que le tapis de détection ou le siège est remplacé et lorsque le contrôleur est réinitialisé.

Le document FR3098769A1 divulgue un siège pourvu de capteurs capacitifs interdigités.

### Présentation de l'invention

La présente invention a pour but de palier aux inconvénients mentionnés ci-dessus.

### Résumé de l'invention

La présente invention a pour premier objet un tapis de détection de l'état d'occupation d'un siège de véhicule, en particulier d'un véhicule automobile, le tapis de détection comportant :
- au moins un support flexible,
- au moins un capteur capacitif interdigité porté par le support flexible,
- au moins une première piste conductrice portée par le support flexible, la première piste conductrice ayant une première extrémité connectée au capteur capacitif interdigité et une deuxième extrémité destinée à être connectée à une unité de calcul,
- au moins une deuxième piste conductrice portée par le support, la deuxième piste conductrice ayant une première extrémité libre et une deuxième extrémité destinée à être connectée à ladite unité de calcul.

Selon un mode de réalisation, la deuxième piste conductrice s'étend sur une longueur comprise entre 20 et 150 millimètres et de préférence entre 50 et 110 millimètres.

La présente invention a pour deuxième objet un système de détermination d'une capacité d'un capteur capacitif interdigité destiné à être agencé sur un siège d'un véhicule, en particulier d'un véhicule automobile, le système comportant :
- au moins un support flexible,
- au moins un capteur capacitif interdigité porté par le support flexible,
- au moins une première piste conductrice portée par le support flexible, la première piste conductrice ayant une première extrémité connectée au capteur capacitif interdigité et une deuxième extrémité ;
- un boitier de connexion ;
- au moins un premier câble électrique connecté à la deuxième extrémité de la première piste conductrice, par l'intermédiaire du boitier de connexion ;
- au moins un deuxième câble électrique connecté à un premier élément de connexion du boitier de connexion,
- une unité de calcul connectée au moins un premier câble électrique et au moins un deuxième câble électrique, l'unité de calcul étant configurée pour déterminer une première capacité à une extrémité du au moins un premier câble électrique et une deuxième capacité à une extrémité du au moins un deuxième câble électrique, l'unité de calcul étant configurée pour soustraire la deuxième capacité à la première capacité pour déterminer la capacité du capteur capacitif interdigité.

Selon un mode de réalisation, le boitier de connexion comporte un deuxième élément de connexion, le système de détermination comportant en outre au moins une deuxième piste conductrice portée par le support flexible, la au moins une deuxième piste conductrice ayant une première extrémité libre et une deuxième extrémité connectée au deuxième élément de connexion du boitier de connexion.

La présente invention a pour troisième objet un siège d'un véhicule automobile comportant une assise, un dossier articulé à l'assise et un système de détermination selon les caractéristiques mentionnées ci-dessus, le support flexible étant fixé sur le dossier ou l'assise.

Les caractéristiques exposées dans les paragraphes suivants peuvent, optionnellement, être mises en œuvre. Elles peuvent être mises en œuvre indépendamment les unes des autres ou en combinaison les unes avec les autres :
- le boitier de connexion comporte un deuxième élément de connexion, le système de détermination comportant en outre au moins une deuxième piste conductrice portée par le support flexible, la deuxième piste conductrice ayant une première extrémité libre et une deuxième extrémité connectée au deuxième élément de connexion du boitier de connexion, et dans lequel la première extrémité libre est disposée dans une zone du siège qui n'est pas en contact avec un occupant, lorsqu'un occupant est assis sur le siège ;
- la première extrémité libre est disposée dans une zone située à l'arrière de l'assise, ladite zone étant adjacente au dossier ;
- l'assise comporte une gorge adjacente au dossier et dans lequel la première extrémité libre est disposée dans ladite gorge.

La présente invention a pour quatrième objet un procédé de détermination d'une capacité d'un capteur capacitif interdigité agencé sur un siège d'un véhicule, en particulier d'un véhicule automobile, par une unité de calcul; le siège comportant au moins un capteur capacitif interdigité; le véhicule comportant une unité de calcul, des premiers éléments conducteurs ayant une première extrémité connectée au capteur capacitif interdigité et une deuxième extrémité connectée à l'unité de calcul, des deuxièmes éléments conducteurs ayant une première extrémité libre et une deuxième extrémité connectée à l'unité de calcul, le procédé comportant les étapes suivantes :
- déterminer une capacité, dite première capacité, à la deuxième extrémité des premiers éléments conducteurs,
- déterminer une capacité , dite deuxième capacité, à la deuxième extrémité des deuxièmes éléments conducteurs,
- soustraire la deuxième capacité déterminée à la première capacité déterminée pour déterminer la capacité du capteur capacitif interdigité agencé sur ledit siège.

La présente invention a pour cinquième objet un procédé de détermination de l'état d'occupation d'un siège d'un véhicule automobile, le procédé comportant les étapes du procédé de détermination de la capacité d'un capteur capacitif interdigité mentionné ci-dessus et une étape de détermination de l'état d'occupation d'un siège à partir de la capacité déterminée.

La présente invention a pour sixième objet un procédé détection d'une rotation d'une partie du tronc d'un occupant assis sur un siège, le procédé comportant les étapes du procédé de détermination de la capacité d'un capteur capacitif interdigité mentionné ci-dessus et une étape de détermination de l'état d'occupation d'un siège à partir de la capacité déterminée.

### Brève description des figures

[Fig.1] est une vue schématique d'un tapis de détection selon un premier mode de réalisation de l'invention ;
[Fig.2] est une vue schématique d'un tapis de détection selon un deuxième mode de réalisation de l'invention ;
[Fig.3] est une vue schématique d'un système de détermination de l'état d'occupation d'un siège selon un premier mode de réalisation de l'invention ;
[Fig.4] est une vue schématique d'un système de détermination de l'état d'occupation d'un siège selon un deuxième mode de réalisation de l'invention ;
[Fig.5] est une vue schématique d'un siège selon l'invention ;
[Fig.6] est un organigramme des étapes du procédé de détection selon la présente invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description détaillée de l'invention

Dans la présente demande de brevet, les termes « avant », et « arrière » sont à interpréter en considérant le sens en marche avant d'un véhicule automobile.

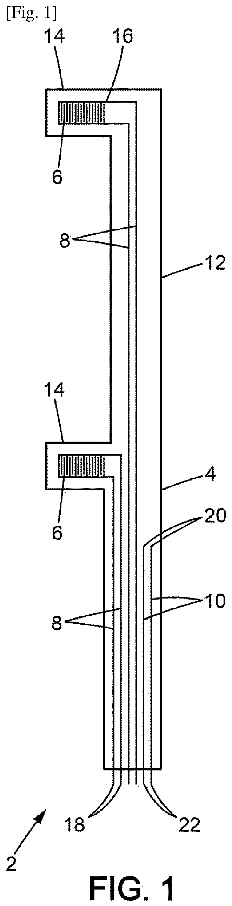

En référence à la [Fig.1], le tapis de détection 2 selon un premier mode de réalisation de l'invention comporte un support flexible 4, deux capteurs capacitifs interdigités 6 portés par le support flexible et des premières 8 et des deuxièmes 10 pistes conductrices portées par le support flexible.

Le support flexible 4 est réalisé dans un matériau imperméable et élastique. Le support flexible 4 peut par exemple être réalisé dans un matériau parmi du polyuéthane thermoplastique, du polydimethylsiloxane (connu sous l'acronyme PDMS), du polyvinyl alcohol (connu sous l'acronyme PVA), du silicone, du polyethylene (connu sous l'acronyme PE), du poly (ethylene 2, 6-naphtalenedicarboxylate) (connu sous l'acronyme PEN) et du polyimide (connu sous l'acronyme PI).

Dans le mode de réalisation représenté et nullement limitatif, le support flexible 4 comprend une bande principale 12 et deux portions de bande 14 s'étendant transversalement à la bande principale.

Les capteurs capacitifs interdigités 6 comprennent chacun deux électrodes coplanaires en forme de peigne qui s'interpénètrent l'une l'autre. Chaque électrode est connectée à une première piste conductrice 8. Une électrode est destinée à être connectée à un potentiel compris entre 5 Volts et 12 Volts. L'autre électrode est connectée à une masse. Les électrodes ne sont pas représentées en détail sur les figures. Les capteurs capacitifs interdigités sont aussi appelés capteurs capacitifs à électrodes interdigités.

Les capteurs capacitifs interdigités 6 sont fixées sur les portions de bande transversale 14 du support flexible, de préférence par impression électronique.

Les premières pistes conductrices 8 sont fixées sur la bande principale 12 du support flexible, de préférence par impression électronique. Elles s'étendent selon une direction longitudinale de la bande principale. Les premières pistes conductrices 8 comprennent chacune une première extrémité 16 connectée à une électrode d'un capteur capacitif interdigité et une deuxième extrémité 18 fixée au bout de la bande principale 12.

Les deuxièmes pistes conductrices 10 sont fixées sur la bande principale du support flexible, de préférence par impression électronique. Elles sont parallèles aux premières pistes conductrices 8. Elles sont adjacentes aux premières pistes conductrices 8. Plus particulièrement, elles sont situées à une distance comprise entre 20 et 150 millimètres par rapport à la première piste conductrice 8 la plus proche.

Les deuxièmes pistes conductrices 10 comprennent chacune une première extrémité libre 20 et une deuxième extrémité 22 située au bout de la bande principale 12. La première extrémité 20 des pistes conductrices est libre, c'est-à-dire qu'elle n'est connectée à aucun composant électronique.

Les deuxièmes extrémités 18,22 des premières et des deuxièmes pistes conductrices sont destinées à être connectées à une unité de calcul, comme explicité ultérieurement.

La deuxième piste conductrice 10 s'étend sur une longueur comprise entre 20 et 150 millimètres et de préférence entre 50 et 110 millimètres.

En variante, le tapis de détection comporte un seul capteur capacitif interdigité 6 et une seule portion de bande latérale 14.

En variante, le tapis de détection comporte un nombre de capteurs capacitifs interdigités supérieur à deux et un nombre de portion de bande latérale 14 correspondant.

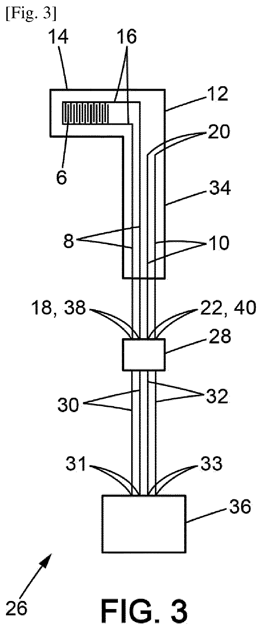

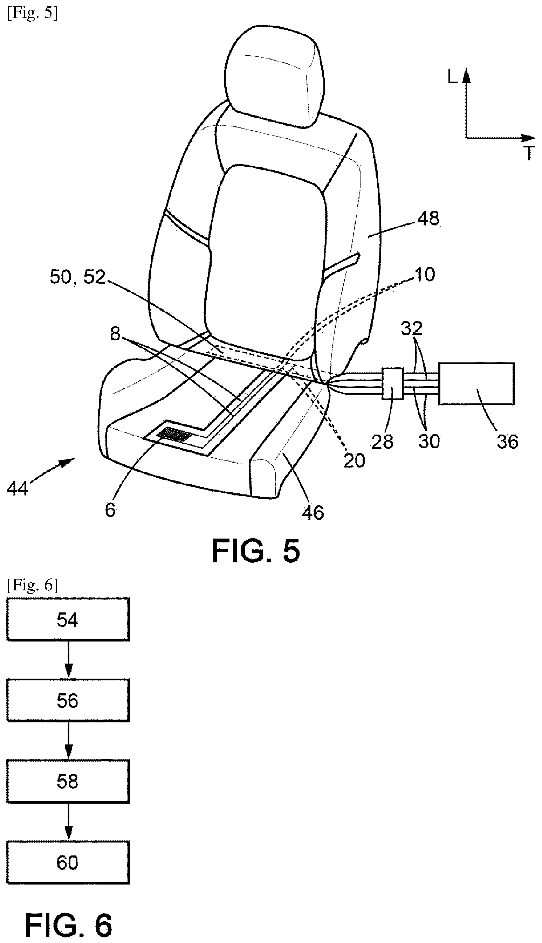

Le fonctionnement du tapis de détection 2 sera décrit en liaison avec les figures 3 et 6.

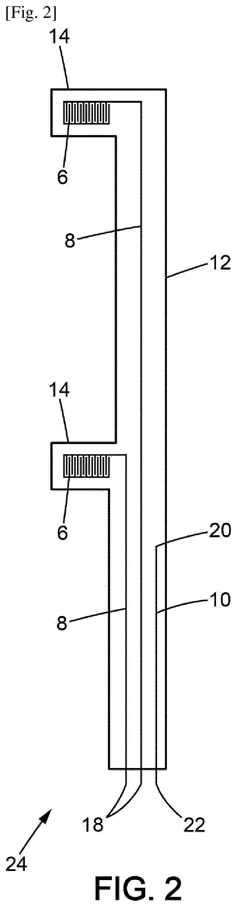

En référence à la [Fig.2], le tapis de détection 24 selon un deuxième mode de réalisation de l'invention est identique au tapis de détection selon le premier mode de réalisation à l'exception du fait qu'une seule première piste conductrice 8 est connectée à chaque capteur capacitif interdigité 6 et par le fait que le tapis de détection comporte une unique deuxième piste conductrice 10.

En référence à la [Fig.3], le système de détermination 26 de l'état d'occupation d'un siège de véhicule automobile selon un premier mode de réalisation de l'invention comporte un support flexible 34, un capteur capacitif interdigité 6 porté par le support flexible 34, deux premières 8 et deux deuxièmes 10 pistes conductrices portées par le support flexible.

Le support flexible 34, le capteur capacitif interdigité 6, les premières 8 et deuxièmes 10 pistes conductrices sont similaires au support flexible 4, aux capteurs capacitifs interdigités, aux premières 8 et deuxièmes 10 pistes de conduction du tapis de détection 2 selon le premier mode de réalisation et ne seront pas décrits à nouveau.

Le système de détermination 26 comporte en outre un boitier de connexion 28, des premiers 30 et des deuxièmes 32 câbles électriques et une unité de calcul 36.

Le boitier de connexion 28 comporte des premiers 38 et des deuxièmes 40 éléments de connexion tels que des douilles conductrices. Les premiers éléments de connexion 38 sont connectés aux deuxièmes extrémités 18 des premières pistes conductrices 8 et aux premiers câbles électriques 30. Les deuxièmes éléments de connexion 40 sont connectés au deuxièmes extrémités 22 des deuxièmes pistes conductrices 10 et aux deuxièmes câbles électriques 32.

Les premiers 30 et deuxièmes 32 câbles électriques sont connectés électriquement à l'unité de calcul 36. Les premiers 30 et deuxièmes 32 câbles électriques font partie d'un faisceau de câbles électriques généralement appelé harnais de câbles.

L'unité de calcul 36 comporte une unité centrale de traitement, tel qu'un processeur ou un microprocesseur. L'unité de calcul comporte aussi une mémoire à accès aléatoire, notée RAM et/ou une mémoire morte, et un code exécutable permettant de mettre en œuvre le procédé de détermination décrit ci-après.

L'unité de calcul 36 peut être un appareil programmable qui utilise un logiciel, un circuit intégré spécifique (ASIC) ou une partie de l'unité de commande d'un moteur (ECU).

L'unité de calcul 36 est configurée pour mesurer une première capacité Cmes entre les extrémités 31 des premiers câbles électriques 30. La première capacité Cmes est représentative de la capacité du capteur capacitif interdigité 6 et des charges électriques présentes dans les premières pistes conductrices 8, dans le boitier de connexion 28 et dans les premiers câbles électriques 30.

Ces charges peuvent être induites dans ces éléments conducteurs par l'environnement et par l'unité de calcul 36.

L'unité de calcul 36 est configurée pour déterminer et une deuxième capacité Cref entre les extrémités 33 des deuxièmes câbles électriques 30.

La deuxième capacité Cref est représentative des charges électriques présentes dans les deuxièmes pistes conductrices 10, dans le boitier de connexion 28 et dans les deuxièmes câbles électriques 30.

L'unité de calcul est en outre configurée pour calculer la différence Ccapa entre la première capacité Cmes et la deuxième capacité Cref et pour déterminer l'état d'occupation d'un siège en fonction de la différence calculée ou pour détection d'une rotation d'une partie du tronc d'un occupant assis sur un siège

Les charges présentes dans les éléments conducteurs situés entre l'extrémité libre 20 de la deuxième piste conductrice 10 et l'unité de calcul 6 sont similaires aux charges présentes dans les premières pistes conductrices 8, le boitier de connexion 28 et les premier câbles électriques 30 car ils sont disposés dans le même environnement, ils subissent les mêmes chocs et sont exposés aux mêmes températures et humidité. Avantageusement, la différence Ccapa est plus représentative des charges électriques réellement présentes dans le capteur capacitif interdigité 6 car les charges présentes dans les éléments conducteurs situés entre l'extrémité libre 20 de la deuxième piste conductrice 10 et l'unité de calcul 6 ont été retirées.

Les charges présentes dans les éléments conducteurs situés entre le capteur capacitif interdigité 6 et l'unité de calcul 6 génèrent un bruit qui engendre une erreur sur la mesure des capacités des capteurs capacitif interdigité.

Ce bruit varie en fonction de l'environnement du système de détermination tel que par exemple des mousses utilisées pour le siège, mais aussi en fonction de la température, de l'humidité dans l'air, du vieillissement des composants électriques et du vieillissement des tissus, mousse, plastique entourant le système de détermination et en fonction des chocs subits aux câbles électriques.

Avantageusement, la deuxième capacité Cref est représentative de ce bruit. La deuxième capacité varie au cours du temps de la même façon que le bruit. Le fait de retirer la deuxième capacité Cref à la première capacité permet d'avoir une mesure plus exacte des capacités réellement présentes dans les capteurs capacitifs interdigités. Cette précision de mesure améliore considérablement les performances des programmes de détermination de la présence d'un occupant et des programmes de détermination de la position d'un occupant. De plus, cette amélioration est encore plus manifeste lorsque le tapis de détection ou le système de détermination et le siège ont une déjà vécu pendant plusieurs années.

Avantageusement, cette invention permet d'augmenter la durée de fonctionnement viable des tapis de détection, des procédés de détermination de la présence d'un occupant et des programmes de détermination de la position d'un occupant pour les rendre plus conforme aux attentes des utilisateurs.

Selon une variante non représentée, le système de détermination 26 comporte :
- une seule première piste conductrice 8 connectée au capteur capacitif interdigité 6,
- un seul premier câble électrique 30 connecté à l'unité de calcul 36 et à la première piste conductrice par le boitier de connexion,
- une unique deuxième piste conductrice 10, et
- un seul deuxième câble électrique 32 connecté à l'unité de calcul 36 et à la deuxième piste conductrice par le boitier de connexion.

Selon cette variante, l'unité de calcul mesure la différence de potentiel entre la masse du véhicule et l'extrémité 31 du premier câble électrique 30 pour déterminer la première capacité Cmes, et la différence de potentiel entre la masse du véhicule et l'extrémité 33 du deuxième câble électrique 32 pour déterminer la deuxième capacité Cref.

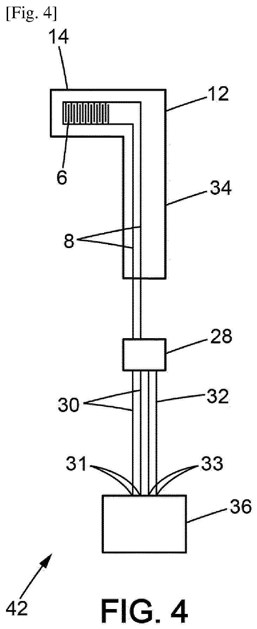

En référence à la [Fig.4], le système de détermination 42 de l'état d'occupation d'un siège de véhicule automobile selon un deuxième mode de réalisation de l'invention est similaire au système de détermination 26 selon le premier mode de réalisation à l'exception du fait qu'il ne comporte pas de deuxièmes pistes conductrices 10. Ce système de détermination ne sera pas redécrit à nouveau.

La deuxième capacité Cref mesurée par l'unité de calcul est ici représentative des charges électriques présentes dans le boitier de connexion 28 et dans les deuxièmes câbles électriques 32.

Ce deuxième mode de réalisation est moins couteux à réaliser mais la mesure de la capacité des capteurs capacitifs interdigités est moins précise qu'avec le système de détermination selon le premier mode de réalisation.

En référence à la [Fig.5], le siège 44 selon la présente invention comporte une assise 46, un dossier 48 articulé à l'assise et un système de détermination conforme au système illustré sur la [Fig.3].

La première extrémité 20 des deuxièmes pistes conductrices est avantageusement fixée dans une zone 50 du siège qui n'est pas une zone de contact avec un occupant, lorsqu'un occupant est assis sur le siège.

En particulier, la zone 50 est située sur la partie arrière de l'assise à proximité du dossier. Elle est recouverte d'au moins une partie du dossier 48 de sorte qu'elle n'est pas en contact avec un occupant lorsque l'occupant est assis sur le siège.

En particulier, la zone 50 est constituée par le bord de l'assise et est appelée médaillon d'assise.

La zone 50 peut être une bande de l'assise qui s'étend selon une direction transversale T.

Selon un mode de réalisation, l'assise comporte une gorge 52 s'étendant selon une direction transversale T. La gorge 52 est située sur la partie arrière de l'assise à proximité du dossier. Elle est recouverte d'au moins une partie du dossier 48. La première extrémité 20 des deuxièmes pistes conductrices est fixée dans la gorge 52.

Selon des variantes moins avantageuses, la première extrémité 20 des deuxièmes pistes conductrices est fixé sur une partie latérale de l'accoudoir ou sur une face arrière du dossier.

En variante, le siège selon l'invention comporte un système de détermination 42 tel qu'illustré sur la [Fig.4].

En référence à la [Fig.6], l'invention concerne également un procédé de détermination d'une capacité d'un capteur capacitif interdigité 6 agencé sur un siège 44 d'un véhicule, en particulier d'un véhicule automobile. Le procédé est mis en oeuvre à l'aide du système de détermination illustré sur la [Fig.3] ou 4.

Le procédé débute par une étape 54 de détermination d'une capacité, dite première capacité Cmes, à la deuxième extrémité 33 de premiers éléments conducteurs. Les premiers éléments conducteurs comprennent au moins une première piste conductrice 8, un boitier de connexion 28 et au moins un premier câble électrique 30.

Puis, le procédé comporte une étape 56 de détermination d'une capacité, dite deuxième capacité Cref, à la deuxième extrémité 33 de deuxièmes éléments conducteurs. Les deuxièmes éléments conducteurs comprennent un boitier de connexion 28 et au moins un deuxième câble électrique 32 si l'on utilise le système de détermination illustré sur la [Fig.4]. Les deuxièmes éléments conducteurs comprennent au moins une deuxième piste conductrice 10, un boitier de connexion 28 et au moins un deuxième câble électrique 32 si l'on utilise le système de détermination illustré sur la [Fig.3].

Le procédé se poursuit par une étape 58 au cours de laquelle la deuxième capacité Cref est soustraite à la première capacité déterminée Cmes pour déterminer la capacité du capteur capacitif interdigité 6 agencé sur ledit siège.

L'invention concerne également un procédé de détermination de l'état d'occupation d'un siège d'un véhicule automobile. Ce procédé comporte les étapes 54 à 58 du procédé de détermination de la capacité d'un capteur capacitif interdigité et une étape 60 de détermination de l'état d'occupation d'un siège à partir de la capacité déterminée à l'issus de l'étape 58. Un exemple de procédé de détermination de l'état d'occupation d'un siège d'un véhicule automobile est décrit dans la demande de brevet publiée sous le numéro FR 3116900.

Le procédé est mis en œuvre par l'unité de calcul 26.

En variante, la capacité d'un capteur capacitif interdigité calculée à l'étape 58 est utilisée dans un procédé de détection d'une rotation d'une partie du tronc d'un occupant assis sur un siège. Un exemple de procédé de détection d'une rotation d'une partie du tronc d'un occupant assis sur un siège est décrit dans la demande de brevet publiée sous le numéro FR 3120124.

## Revendications

1. Tapis de détection (2, 24) de l'état d'occupation d'un siège de véhicule, en particulier d'un véhicule automobile, le tapis de détection comportant :
- au moins un support flexible (4),
- au moins un capteur capacitif interdigité (6) porté par le support flexible,
- au moins une première piste conductrice (8) portée par le support flexible, la première piste conductrice (8) ayant une première extrémité (16) connectée au capteur capacitif interdigité (6) et une deuxième extrémité (18) destinée à être connectée à une unité de calcul,
- au moins une deuxième piste conductrice (10) portée par le support, la deuxième piste conductrice ayant une extrémité (22) destinée à être connectée à ladite unité de calcul, **caractérisé en ce que** la deuxième piste conductrice a une autre extrémité libre (20).

2. Tapis de détection (2, 24) selon la revendication 1, dans lequel la deuxième piste conductrice (10) s'étend sur une longueur comprise entre 20 et 150 millimètres et de préférence entre 50 et 110 millimètres.

3. Système de détermination (26, 42) d'une capacité d'un capteur capacitif interdigité (6) destiné à être agencé sur un siège (44) d'un véhicule, en particulier d'un véhicule automobile, le système (26, 42) comportant :
- au moins un support flexible (34),
- au moins un capteur capacitif interdigité (6) porté par le support flexible,
- au moins une première piste conductrice (10) portée par le support flexible, la première piste conductrice (10) ayant une première extrémité (16) connectée au capteur capacitif interdigité et une deuxième extrémité (18);
- un boitier de connexion (28) ;
- au moins un premier câble électrique (30) connecté à la deuxième extrémité (22) de la première piste conductrice (8), par l'intermédiaire du boitier de connexion ;
- au moins un deuxième câble électrique (32) connecté à un premier élément de connexion (38) du boitier de connexion,
- une unité de calcul (36) connectée au moins un premier câble électrique (30) et au moins un deuxième câble électrique (32), l'unité de calcul (36) étant configurée pour déterminer une première capacité (Cmes) à une extrémité (31) du au moins un premier câble électrique (30) et une deuxième capacité (Cref) à une extrémité (33) du au moins un deuxième câble électrique (32), l'unité de calcul (36) étant configurée pour soustraire la deuxième capacité (Cref) à la première capacité (Cmes) pour déterminer la capacité du capteur capacitif interdigité (6).

4. Système de détermination (26) selon la revendication 3, dans lequel le boitier de connexion (28) comporte un deuxième élément de connexion (40), le système de détermination comportant en outre au moins une deuxième piste conductrice (10) portée par le support flexible, la au moins une deuxième piste conductrice (10) ayant une première extrémité libre (20) et une deuxième extrémité (22) connectée au deuxième élément de connexion (40) du boitier de connexion.

5. Siège (44) d'un véhicule automobile comportant une assise (46), un dossier (48) articulé à l'assise et un système de détermination (42) selon la revendication 3, le support flexible (34) étant fixé sur le dossier ou l'assise.

6. Siège (44) selon la revendication 5, dans lequel le boitier de connexion (28) comporte un deuxième élément de connexion (40) , le système de détermination comportant en outre au moins une deuxième piste conductrice (10) portée par le support flexible, la deuxième piste conductrice (10) ayant une première extrémité libre (20) et une deuxième extrémité (22) connectée au deuxième élément de connexion (40) du boitier de connexion, et dans lequel la première extrémité libre (20) est disposée dans une zone (50) du siège qui n'est pas en contact avec un occupant, lorsqu'un occupant est assis sur le siège.

7. Siège (44) selon la revendication 6, dans lequel la première extrémité libre (20) est disposée dans une zone (50) située à l'arrière de l'assise, ladite zone (50) étant adjacente au dossier.

8. Siège (44) selon la revendication 6, dans lequel l'assise (46) comporte une gorge (52) adjacente au dossier (48) et dans lequel la première extrémité libre (20) est disposée dans ladite gorge.

9. Procédé de détermination d'une capacité d'un capteur capacitif interdigité (6) agencé sur un siège (44) d'un véhicule, en particulier d'un véhicule automobile, par une unité de calcul (26); le siège (44) comportant au moins un capteur capacitif interdigité (6); le véhicule comportant une unité de calcul (26), des premiers éléments conducteurs (8, 28, 30, 38) ayant une première extrémité (16) connectée au capteur capacitif interdigité (6) et une deuxième extrémité (31) connectée à l'unité de calcul, des deuxièmes éléments conducteurs (10, 28, 40, 32) ayant une première extrémité libre (20) et une deuxième extrémité (33) connectée à l'unité de calcul (26), le procédé comportant les étapes suivantes :
- déterminer (54) une capacité, dite première capacité (Cmes), à la deuxième extrémité (31) des premiers éléments conducteurs,
- déterminer (56) une capacité , dite deuxième capacité (Cref), à la deuxième extrémité (33) des deuxièmes éléments conducteurs,
- soustraire (58) la deuxième capacité (Cref) déterminée à la première capacité déterminée (Cmes) pour déterminer la capacité du capteur capacitif interdigité (6) agencé sur ledit siège.

10. Procédé de détermination de l'état d'occupation d'un siège d'un véhicule automobile, le procédé comportant les étapes du procédé de détermination de la capacité d'un capteur capacitif interdigité (6) selon la revendication 9 et une étape (60) de détermination de l'état d'occupation d'un siège à partir de la capacité déterminée.

11. Procédé de détection d'une rotation d'une partie du tronc d'un occupant assis sur un siège d'un véhicule automobile, le procédé comportant les étapes du procédé de détermination de la capacité d'un capteur capacitif interdigité (6) selon la revendication 9 et une étape de détermination de l'état d'occupation d'un siège à partir de la capacité déterminée.

## Patentansprüche

1. Matte (2, 24) zum Erfassen des Belegungszustandes eines Fahrzeugsitzes, insbesondere eines Kraftfahrzeugs, wobei die Erfassungsmatte umfasst:
- mindestens einen flexiblen Träger (4),
- mindestens einen interdigitierten kapazitiven Sensor (6), der von dem flexiblen Träger getragen wird,
- mindestens eine erste Leiterbahn (8), die von dem flexiblen Träger getragen wird, wobei die erste Leiterbahn (8) ein erstes Ende (16), das mit dem interdigitierten kapazitiven Sensor (6) verbunden ist, und ein zweites Ende (18), das mit einer Recheneinheit verbunden werden soll, aufweist,
- mindestens eine zweite Leiterbahn (10), die vom Träger getragen wird,
wobei die zweite Leiterbahn ein Ende (22), das mit der Recheneinheit verbunden werden soll, aufweist, **dadurch gekennzeichnet, dass** die zweite Leiterbahn ein weiteres freies Ende (20) aufweist.

2. Erfassungsmatte (2, 24) nach Anspruch 1, wobei sich die zweite Leiterbahn (10) über eine Länge von zwischen 20 und 150 Millimetern und vorzugsweise zwischen 50 und 110 Millimetern erstreckt.

3. System (26, 42) zum Bestimmen einer Kapazität eines interdigitierten kapazitiven Sensors (6), der dazu bestimmt ist, auf einem Sitz (44) eines Fahrzeugs, insbesondere eines Kraftfahrzeugs, angeordnet zu werden, wobei das System (26, 42) umfasst:
- mindestens einen flexiblen Träger (34),
- mindestens einen interdigitierten kapazitiven Sensor (6), der von dem flexiblen Träger getragen wird,
- mindestens eine erste Leiterbahn (10), die von dem flexiblen Träger getragen wird, wobei die erste Leiterbahn (10) ein erstes Ende (16), das mit dem interdigitierten kapazitiven Sensor verbunden ist, und ein zweites Ende (18) aufweist;
- ein Anschlussgehäuse (28);
- mindestens ein erstes elektrisches Kabel (30), das über das Anschlussgehäuse mit dem zweiten Ende (22) der ersten Leiterbahn (8) verbunden ist;
- mindestens ein zweites elektrisches Kabel (32), das mit einem ersten Anschlusselement (38) des Anschlussgehäuses verbunden ist,
- eine Recheneinheit (36), die mit mindestens einem ersten elektrischen Kabel (30) und mindestens einem zweiten elektrischen Kabel (32) verbunden ist, wobei die Recheneinheit (36) konfiguriert ist, um eine erste Kapazität (Cmes) an einem Ende (31) des mindestens einen ersten elektrischen Kabels (30) und eine zweite Kapazität (Cref) an einem Ende (33) des mindestens einen zweiten elektrischen Kabels (32) zu bestimmen, wobei die Recheneinheit (36) konfiguriert ist, um die zweite Kapazität (Cref) von der ersten Kapazität (Cmes) zu subtrahieren, um die Kapazität des interdigitierten kapazitiven Sensors (6) zu bestimmen.

4. Bestimmungssystem (26) nach Anspruch 3, wobei das Anschlussgehäuse (28) ein zweites Anschlusselement (40) umfasst, wobei das Bestimmungssystem ferner mindestens eine zweite Leiterbahn (10) umfasst, die von dem flexiblen Träger getragen wird, wobei die mindestens eine zweite Leiterbahn (10) ein erstes freies Ende (20) und ein zweites Ende (22), das mit dem zweiten Anschlusselement (40) des Anschlussgehäuses verbunden ist, aufweist.

5. Sitz (44) eines Kraftfahrzeugs, umfassend ein Sitzunterteil (46), eine an dem Sitzunterteil gelenkig angebrachte Rückenlehne (48) und ein Bestimmungssystem (42) nach Anspruch 3, wobei der flexible Träger (34) an der Rückenlehne oder dem Sitzunterteil befestigt ist.

6. Sitz (44) nach Anspruch 5, wobei das Anschlussgehäuse (28) ein zweites Anschlusselement (40) umfasst, wobei das Bestimmungssystem ferner mindestens eine zweite Leiterbahn (10), die von dem flexiblen Träger getragen wird, umfasst, wobei die zweite Leiterbahn (10) ein erstes freies Ende (20) und ein zweites Ende (22) aufweist, das mit dem zweiten Anschlusselement (40) des Anschlussgehäuses verbunden ist, und wobei das erste freie Ende (20) in einer Zone (50) des Sitzes angeordnet ist, die nicht mit einem Insassen in Kontakt ist, wenn ein Insasse auf dem Sitz sitzt.

7. Sitz (44) nach Anspruch 6, wobei das erste freie Ende (20) in einer Zone (50) angeordnet ist, die sich hinter der Sitzunterseite befindet, wobei die Zone (50) an die Rückenlehne angrenzt.

8. Sitz (44) nach Anspruch 6, wobei das Sitzunterteil (46) eine an die Rückenlehne (48) angrenzende Nut (52) umfasst und wobei das erste freie Ende (20) in dieser Nut angeordnet ist.

9. Verfahren zum Bestimmen einer Kapazität eines an einem Sitz (44) eines Fahrzeugs, insbesondere eines Kraftfahrzeugs, angeordneten interdigitierten kapazitiven Sensors (6) durch eine Recheneinheit (26); wobei der Sitz (44) mindestens einen interdigitierten kapazitiven Sensor (6) umfasst; wobei das Fahrzeug eine Recheneinheit (26), erste leitfähige Elemente (8, 28, 30, 38) mit einem ersten Ende (16), das mit dem interdigitierten kapazitiven Sensor (6) verbunden ist, und einem zweiten Ende (31), das mit der Recheneinheit verbunden ist, zweite leitfähige Elemente (10, 28, 40, 32) mit einem ersten freien Ende (20) und einem zweiten Ende (33), das mit der Recheneinheit (26) verbunden ist, umfasst, wobei das Verfahren die folgenden Schritte umfasst:
- Bestimmen (54) einer Kapazität, als erste Kapazität (Cmes) bezeichnet, am zweiten Ende (31) der ersten leitfähigen Elemente,
- Bestimmen (56) einer Kapazität, als zweite Kapazität (Cref) bezeichnet, am zweiten Ende (33) der zweiten leitfähigen Elemente,
- Subtrahieren (58) der bestimmten zweiten Kapazität (Cref) von der bestimmten ersten Kapazität (Cmes), um die Kapazität des auf dem Sitz angeordneten interdigitierten kapazitiven Sensors (6) zu bestimmen.

10. Verfahren zum Bestimmen des Belegungszustands eines Sitzes eines Kraftfahrzeugs, wobei das Verfahren die Schritte des Verfahrens zum Bestimmen der Kapazität eines interdigitierten kapazitiven Sensors (6) nach Anspruch 9 und einen Schritt (60) zum Bestimmen des Belegungszustands eines Sitzes von der bestimmten Kapazität umfasst.

11. Verfahren zum Erfassen einer Drehung eines Teils des Rumpfes eines auf einem Sitz eines Kraftfahrzeugs sitzenden Insassen, wobei das Verfahren die Schritte des Verfahrens zum Bestimmen der Kapazität eines interdigitierten kapazitiven Sensors (6) nach Anspruch 9 und einen Schritt zum Bestimmen des Belegungszustands eines Sitzes von der bestimmten Kapazität umfasst.

## Claims

1. A mat (2, 24) for detecting the state of occupancy of a vehicle seat, in particular of a motor vehicle, the detection mat comprising:
- at least one flexible support (4),
- at least one interdigitated capacitive sensor (6) borne by the flexible support,
- at least a first conductive track (8) borne by the flexible support, the first conductive track (8) having a first end (16) connected to the interdigitated capacitive sensor (6) and a second end (18) intended to be connected to a computing unit,
- at least one second conductive track (10) borne by the support, the second conductive track having an end (22) intended to be connected to said computing unit, **characterized in that** the second conductive track has another free end (20).

2. The detection mat (2, 24) according to claim 1, wherein the second conductive track (10) extends over a length of between 20 and 150 millimeters, and preferably between 50 and 110 millimeters.

3. A system (26, 42) for determining a capacitance of an interdigitated capacitive sensor (6) intended to be arranged on a seat (44) of a vehicle, in particular of a motor vehicle, the system (26, 42) comprising:
- at least one flexible support (34),
- at least one interdigitated capacitive sensor (6) borne by the flexible support,
- at least a first conductive track (10) borne by the flexible support, the first conductive track (10) having a first end (16) connected to the interdigitated capacitive sensor and a second end (18);
- a connection housing (28);
- at least one first electrical cable (30) connected to the second end (22) of the first conductive track (8), via the connection housing;
- at least one second electrical cable (32) connected to a first connection element (38) of the connection housing,
- a computing unit (36) connected at least one first electrical cable (30) and at least one second electrical cable (32), the computing unit (36) being configured to determine a first capacitance (Cmes) at one end (31) of the at least one first electrical cable (30) and a second capacitance (Cref) at one end (33) of the at least one second electrical cable (32), the computing unit (36) being configured to subtract the second capacitance (Cref) from the first capacitance (Cmes) to determine the capacitance of the interdigitated capacitive sensor (6).

4. The determining system (26) according to claim 3, wherein the connection housing (28) comprises a second connection element (40), the determining system further comprising at least one second conductive track (10) borne by the flexible support, the at least one second conductive track (10) having a first free end (20) and a second end (22) connected to the second connection element (40) of the connection housing.

5. A seat (44) of a motor vehicle comprising a seat bottom (46), a backrest (48) articulated to the seat bottom and a determining system (42) according to claim 3, the flexible support (34) being attached to the backrest or the seat bottom.

6. The seat (44) according to claim 5, wherein the connection housing (28) comprises a second connection element (40), the determining system further comprising at least one second conductive track (10) borne by the flexible support, the second conductive track (10) having a first free end (20) and a second end (22) connected to the second connection element (40) of the connection housing, and wherein the first free end (20) is arranged in a zone (50) of the seat which is not in contact with an occupant, when an occupant is seated on the seat.

7. The seat (44) according to claim 6, wherein the first free end (20) is arranged in a zone (50) located behind the seat bottom, said zone (50) being adjacent to the backrest.

8. The seat (44) according to claim 6, wherein the seat bottom (46) comprises a groove (52) adjacent to the backrest (48) and wherein the first free end (20) is arranged in said groove.

9. A method for determining a capacitance of an interdigitated capacitive sensor (6) arranged on a seat (44) of a vehicle, in particular of a motor vehicle, by a computing unit (26); the seat (44) comprising at least one interdigitated capacitive sensor (6); the vehicle comprising a computing unit (26), first conductive elements (8, 28, 30, 38) having a first end (16) connected to the interdigitated capacitive sensor (6) and a second end (31) connected to the computing unit, second conductive elements (10, 28, 40, 32) having a first free end (20) and a second end (33) connected to the computing unit (26), the method comprising the following steps:
- determining (54) a capacitance, called first capacitance (Cmes), at the second end (31) of the first conductive elements,
- determining (56) a capacitance, called second capacitance (Cref), at the second end (33) of the second conductive elements,
- subtracting (58) the determined second capacitance (Cref) from the determined first capacitance (Cmes) to determine the capacitance of the interdigitated capacitive sensor (6) arranged on said seat.

10. A method for determining the state of occupancy of a seat of a motor vehicle, the method comprising the steps of the method for determining the capacitance of an interdigitated capacitive sensor (6) according to claim 9 and a step (60) of determining the state of occupancy of a seat from the determined capacitance.

11. A method for detecting a rotation of a part of the trunk of an occupant seated on a seat of a motor vehicle, the method comprising the steps of the method for determining the capacitance of an interdigitated capacitive sensor (6) according to claim 9 and a step of determining the state of occupancy of a seat from the determined capacitance.
